# EUROPEAN PATENT APPLICATION

(11) **EP 1 014 253 A1**
(43) Date of publication of application: **28.06.2000**
(21) Application number: 98124169.8
(22) Date of filing: 21.12.1998
(51) Int. Cl.: G06F 3/023

(54) **Method of inputting a character using a restricted number of keys**

(71) Applicant: TELEFONAKTIEBOLAGET LM ERICSSON, 126 25 Stockholm (SE)
(72) Inventor: Hedberg, Anders, 226 46 Lund (SE); Ketwich, Johan van, 211 52 Malmö (SE)
(74) Representative: Roerboel, Leif

(57) **Abstract**

In a method of the kind, in which only few keys are used to select a character from a character set, the main novel feature is that the character set is repeatedly divided into a number n of groups or sub-groups, the number n corresponding to the number of keys that are used. With this arrangement, a desired character can be selected from a character set by using few keys and using few key activations.

## Description

### TECHNICAL FIELD

The present invention relates to a method of inputting a character of a character set in few steps and with few keys. By the term 'few' keys is meant a number significantly smaller than the number of keys on a conventional 'Sholes' keyboard.

### BACKGROUND ART

JP-A-58-176 732 discloses a conventional method of inputting characters using few keys. Two arrow keys are used to scroll the alphabet over a single character display, whereupon the actually displayed character may be entered by depressing an input key, whereby the selected character is added to the memory and to a second display which shows the words that have been written.

JP-A-8-006 694 discloses a method in which the character set is divided into groups, the appropriate group being selected by repeatedly pressing a first key until the desired group, called a table, is displayed, whereafter the desired character is selected by moving up and down or left and right with four general arrow keys. The input is then completed by using an enter key.

A disadvantage of these known methods is that the number of key depressions needed in order to select the desired character is high and therefore selecting process is long and cumbersome.

This is particularly a drawback for keyboards or keypads which have only few keys available for selecting characters such as the keypads on a remote control of appliances such as TV's, alarm systems, telephones (also wireless and mobile), calculators, electronic organisers etc.

### DISCLOSURE OF THE INVENTION

It is therefore an object of the present invention to provide a method for selecting a character from a character set without the above-mentioned disadvantages that allows to select a character from a character set in few steps and with few keys.

This object is achieved with the method according to claim 1. The method is particularly advantageous, since it does not require the use of an 'enter' key. The method is relatively simple and easy to understand so that it can be quickly learned and accepted by the users.

The method can be used with any alphanumeric character set such as the Latin, Greek, Cyrillic, Hebrew, Arabic, Japanese, etc. alphabet, for character sets comprising numbers and for combinations of these sets as well as for any other definable character set.

### BRIEF DESCRIPTION OF THE DRAWINGS

In the following detailed part of the present description, the invention will be explained in more detail with reference to the exemplary embodiments of the method and the system according to the invention shown in the drawings, in which
Figure 1 shows a keypad and a display means,
Figures 2-5 show the display changes through the selection process, and
Figure 6 shows a flow chart of an embodiment of the method.

### DESCRIPTION OF THE PREFERRED EMBODIMENT

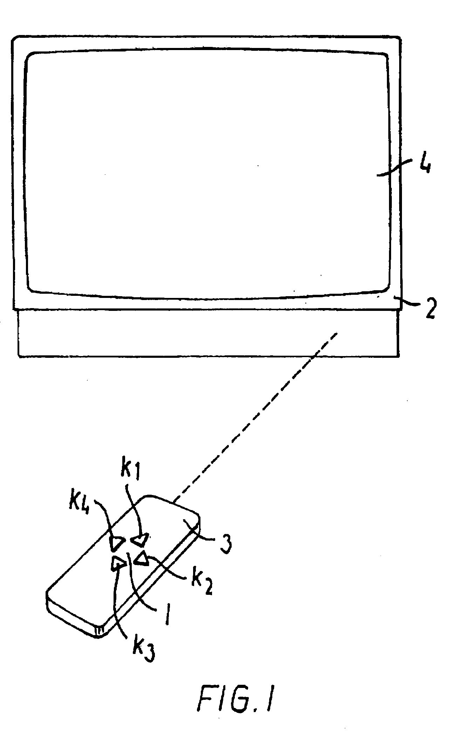

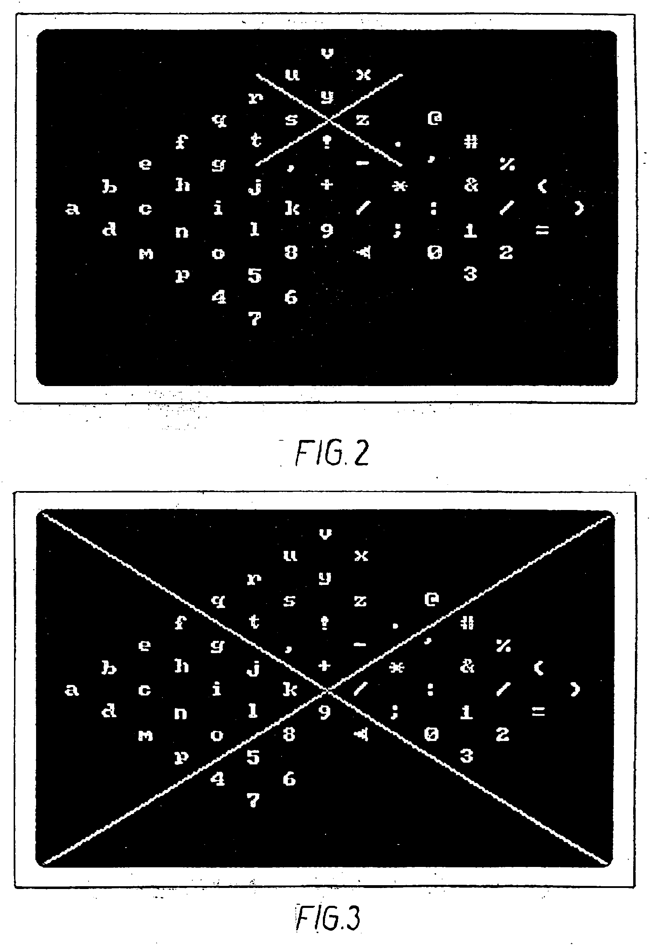

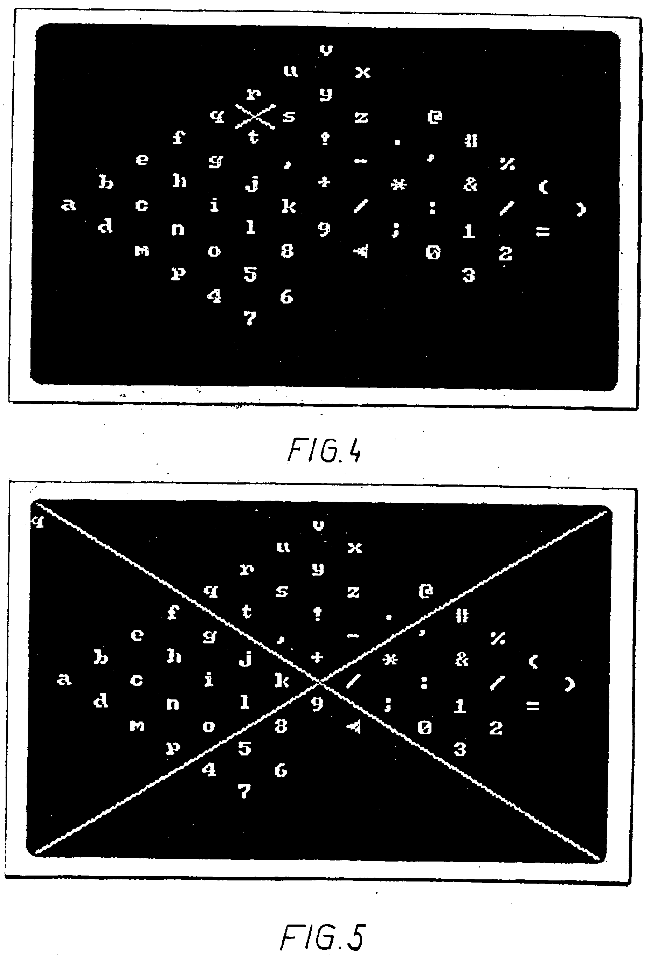

Figure 1 shows a system with which the method of inputting a character can be used. The system shown in Figure 1 is a so-called web-TV, i.e. a TV set 2 that communicates with an information network such as e.g. the internet. The TV therefore comprises a logic unit including memory-communication- and processor means. The TV set 2 is provided with a keypad on a conventional remote control, through which the TV set 2 is controlled and which keypad is used to enter characters. On a remote control 3 of a TV set 2 there is normally no place for the keys of a conventional Sholes keyboard. In this embodiment of the method only four keys are used, i.e. the four arrow-keys: 'up', 'down', 'left' and 'right'. When the user starts to input a character or character string, the system will display the complete character set on the TV-screen 4 and the division into groups G1...G4 as well as their respective assignment to a particular key K1...K4 of the keypad 1. As can be seen from Figures 2-5 in the present example, the character set is divided by two diagonal lines over the display, thereby dividing the character set into four groups G1...G4. The upper group being assigned to the 'up' arrow key, the lower group on the display being assigned to the 'down' arrow keys, the left group on the display being assigned to the 'left' arrow key and the right group on the display 4 being assigned to the 'right' arrow key. The first step towards entering the desired character, which in the example according to Figures 2-5 is the letter 'q', is activating the key K1...K4 assigned to the group G1...G4 which contains the desired character. When this group G1...G4 has been selected by activating the corresponding key K1...K4, in this case the 'up' arrow key K1, the display 4 will change so as to indicate the selected group G1...G4 and provide a new sub-division of the selected group into four sub-groups GS1...GS4 indicated by two correspondingly placed diagonal lines dividing the selected group into four sub-groups, as can be seen from Figure 3. The keys are re-assigned to the new sub-groups GS1...GS4 as above. The number of characters in each sub-group is in this example now reduced to four characters. By activating the key K1...K4 assigned to the sub-group SG1...SG4 which contains the desired character, in this case the 'left' arrow key K4, the corresponding sub-group GS1...GS4 will be selected and the display 4 will change to indicate the selected sub-group GS1...GS4, whereby, as can be seen in Figure 4, each sub-group now contains only one single character. When the key K1...K4 corresponding to the sub-group GS1...GS4 containing the desired character is activated, in this case the left arrow key K4, the character is inputted and the display 4 will return to the starting condition as shown in Figure 5 and thereby preferably indicating the characters that have been entered.

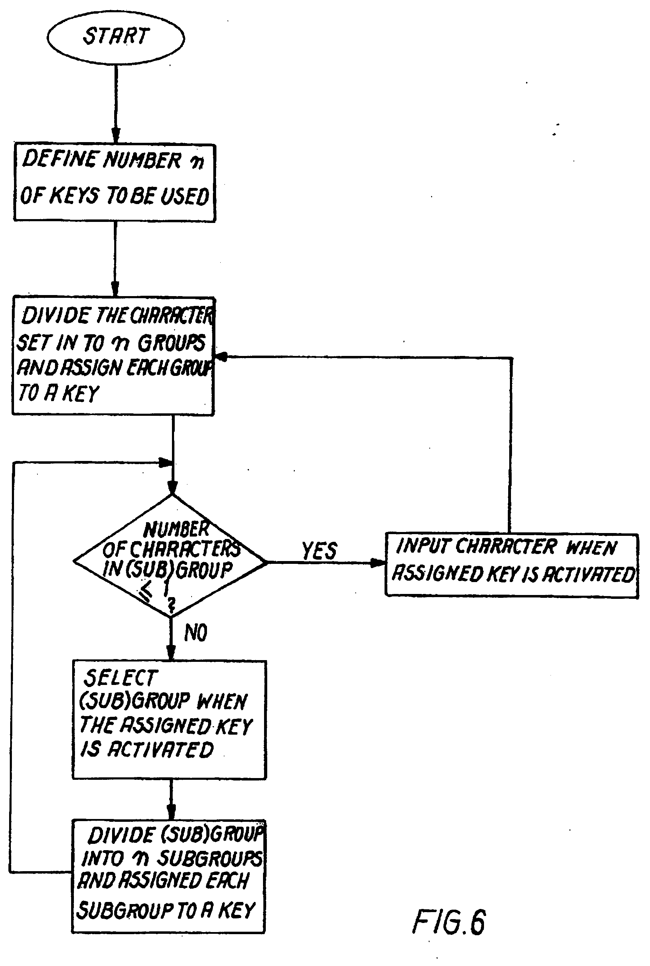

The method as such is illustrated by the flow chart of Figure 6. The method will start by defining the number n of keys K1...Kn that are used and thereafter subdividing the character set into a corresponding number of groups G1...Gn. When a key is activated, the corresponding group G1...Gn is selected and subdivided again into the number in sub-groups GS1...GSn. The process is then repeated until only a single character is contained in each sub-group GS1...GSn so that the desired character may be entered. In this last stage, some of the sub-groups may be empty.

According to another embodiment of the invention, the method also includes the possibility of activating two keys K1...Kn simultaneously and assign to this simultaneous activation special functions i.e. "shift", "delete" and mode switching. According to a specific embodiment, the activation of both the upper and lower arrow key starts the inputting of characters. The activation of the left and right is assigned to the "delete" function. The activation of the left and upper arrow keys is assigned to the "shift" function and the end of the inputting of the characters is assigned by a renewed activation of the upper and lower arrow keys.

The number of single symbols that can be selected by a number p key-activations on a number n keys is n^p. The embodiment described above, uses four keys, so that with three key-activations a character from a character set comprising up to 3^4 = 64 symbols can be entered.

The method is, therefore, especially advantageous for use with alphabets or other character sets which comprise a relatively high number of different symbols. The method is suited for use with any kind of alphabet, such as Latin, Greek, Cyrillic, Hebrew, Arabic, Chinese, Japanese, etc. The character set may comprise other symbols than those of the alphabets such as numbers and any other kind of symbols.

The method is not limited to the use of a display to inform the user of the selected groups, e.g. the method can be used for entering characters over the phone by using a phone without a display, whereby the user is informed of the division of the character set into groups and sub-groups in audio. The user will thus first be informed over the phone of the content of the character set as such, the keys assigned to the groups and sub-groups and thereafter the method will take the steps as described above in order to arrive at a division into sub-groups, with each containing no more than one symbol, whereafter the desired symbol can be entered by activating the assigned key. In this embodiment the keypad of a conventional telephone, which is normally used to enter the telephone number, is sufficient to carry out the method effectively.

Although the method has been described above with reference to a TV set and a telephone, it is understood that the use of the method is not limited to such systems, and that various modifications can be made by the person skilled in the art within the scope of the appending claims. The method according to the present invention can be used with any system comprising a keypad with at least two keys and a means for informing the user of the character set, the division of the character set and the assignment of the keys to the different groups and sub-groups. Such systems may be e.g. numeric control machines, mobile telephones, calculators electronic organizers, computers, terminals for information networks, etc.

It is understood that any system in which the method is used requires hardware and software for operating it, also if such hardware and software is not incorporated in the keypad but is situated in separate equipment that is in communication with the keypad. The word 'key' means in this document an element or area on the keypad that registers if pressed, released, manipulated or touched or otherwise activated by the user. Such registration by the key can be done through the closing of an electrical switch or through other suitable form of sensing or scanning device.

The term 'inputting of a character' designates the event when a number of actions done by the user on the keypad results in one or more (alphanumeric) characters being transferred to some sort of memory or other receiving device in the keypad or in a piece of equipment connected to it.

### LIST OF REFERENCE NUMERALS

- 1: keypad
- 2: TV set
- 3: remote control
- 4: TV-screen
- G1...Gn: group
- GS1...GSn: sub-group
- K1...Kn: key

## Claims

1. Method for inputting a character from a set of characters using a number n of keys (K1...Kn) of a keypad (1) comprising the steps of:
a) dividing the character set into n groups (G1...Gn) corresponding to the number (n) of keys (K1...Kn) to be used,
b) assigning each group (G1...Gn) to an individual key (K1...Kn),
c) selecting a group (G1...Gn) or sub-group (SG1...SGn) upon activation of the key (K1...Kn) assigned to that group or sub-group,
d) subdividing the selected group or sub-group into n sub-groups (GS1....GSn),
e) assigning each sub-group (GS1...GSn) to an individual key (K1...Kn),
f) when the number of characters in a sub-group (GS1...GSn) is greater than 1 repeating steps c) to e),
g) inputting the character of a sub-group (GS1...GSn) upon activation of the key (K1...Kn) assigned to that sub-group.

2. Method according to claim 1, further comprising the step of returning to step a) after step g).

3. Method according to claim 1 or 2, further comprising the step of displaying the character set and the division of the character set into groups and sub-groups.

4. Method according to claim 3, further comprising the step of displaying the characters that have been input.

5. Method according to claim 1 or 2, wherein the information relating to the content of the character set, the division of the character into groups or sub-groups and the assignment of the keys (K1...Kn) to the groups or sub-groups is transmitted to the user by audio.

6. Method according to any of the preceding claims, wherein the activation of two keys simultaneously is assigned with a shift function, a delete function or mode switching.

7. Use of the method according to any of the claims 1 to 6 with a TV-set (2), a telephone or other terminal to a communication or information network, a calculator or electronic organizer.
